(19)

**Europäisches Patentamt**
**European Patent Office**
**Office européen des brevets**

(11) **EP 4 714 790 A1**

(12) **EUROPEAN PATENT APPLICATION**

(43) Date of publication:
**25.03.2026 Bulletin 2026/13**

(21) Application number: **25194286.8**

(22) Date of filing: **06.08.2025**

(51) International Patent Classification (IPC):
**B62D 13/04** (2006.01)

(52) Cooperative Patent Classification (CPC):
**B62D 13/04;** B62D 6/002; B62D 13/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.09.2024 SE 2450942**

(71) Applicant: **Volvo Truck Corporation
405 08 Göteborg (SE)**

(72) Inventors:
• **PARMAR, Rishabh
GÖTEBORG (SE)**
• **CHINNI, Bala
GÖTEBORG (SE)**
• **GELSO, Esteban
VÄSTRA FRÖLUNDA (SE)**
• **SADEGHI KATI, Maliheh
ÖJERSJÖ (SE)**

(74) Representative: **Ström & Gulliksson AB
P.O. Box 4188
203 13 Malmö (SE)**

(54) **STEERING CONTROL FOR TRAILING UNITS OF VEHICLE COMBINATIONS**

(57) A computer system for determining steering angles for steered axles of a trailing unit of a vehicle combination. The computer system comprises processing circuitry configured to express (302) a cost associated with lateral slip losses of the trailing unit as a function of a first steering angle of a frontmost axle of the trailing unit and a second steering angle of a rearmost axle of the trailing unit and determine (304) a value for the first steering angle and a value for the second steering angle such that the cost is below a threshold, wherein the first steering angle and the second steering angle enable the trailing unit to travel a curve of a given turning radius.

300

Expressing a cost associated with lateral slip losses of the trailing unit — 302

Determining a value for the first steering angle and a value for the second steering angle such that the cost is below a threshold — 304

Providing the determined steering angle values to a control system configured to determine control inputs for the vehicle combination — 306

**FIG. 3**

## Description

### TECHNICAL FIELD

The disclosure relates generally to vehicle motion management. In particular aspects, the disclosure relates to steering control for trailing units of vehicle combinations. The disclosure can be applied to heavy-duty vehicles, such as trucks, buses, and construction equipment, among other vehicle types. In particular, the disclosure can be applied in automated multi-unit vehicle combinations.

### BACKGROUND

Vehicle motion management of vehicle combinations is challenging due to the complexity of coordinating multiple vehicle units together. As the vehicle combination is operated to perform different types of manoeuvre, energy management and manoeuvrability are often important objectives. For a vehicle combination being manoeuvred at low speed, for example during a turn, lateral slip losses on the trailers is a particular problem. Another critical parameter for a vehicle combination performing a turn is the swept path width, i.e. the space the vehicle occupies on the ground while making a turn. Consequently, limiting slip losses and optimising swept path width is important in order to control vehicle combinations safely and efficiently.

It is therefore desired to develop a solution for vehicle motion management that addresses or at least mitigates some of these issues.

### SUMMARY

This disclosure provides systems, methods and other approaches for determining steering angles for steered axles of a trailing unit of a vehicle combination. Through active steering based in the determined steering angles, the vehicle combination can be controlled accordingly such that lateral slip losses are reduced and swept path width reduced. The steering angles are determined by expressing a cost associated with the lateral slip losses of the trailing unit as a function of steering angles of axles of the trailing unit. Values for the steering angles may then be determined to enable the trailing unit to travel a curve of a given turning radius while reducing, e.g. minimising, the cost. Thereby, lateral power losses is reduced and manoeuvrability at low speeds enhanced. This is particularly advantageous in the case of autonomously controlled vehicles.

According to a first aspect of the disclosure, there is provided a computer system for determining steering angles for steered axles of a trailing unit of a vehicle combination, the computer system comprising processing circuitry configured to, express a cost associated with lateral slip losses of the trailing unit as a function of a first steering angle of a frontmost axle of the trailing unit and a second steering angle of a rearmost axle of the trailing unit; and determine a value for the first steering angle and a value for the second steering angle such that the cost is below a threshold, wherein the first steering angle and the second steering angle enable the trailing unit to travel a curve of a given turning radius.

The first aspect of the disclosure may seek to provide a computer system for determining the optimal steering angles for a trailing unit travelling a curve of a given radius. A technical benefit may include that the determined steering angles may be implemented in the trailing unit such that it is enabled to travel a curve of a given radius with low, e.g. minimal, lateral slip losses, thereby reducing power losses and improving energy efficiency of the vehicle combination.

Optionally in some examples, including in at least one preferred example, the cost comprises a cost associated with a swept path of the trailing unit as a function of the steering angles for the steered axles of the trailing unit. A technical benefit may include that swept path width is taken into consideration when determining the optimum steering angles for the trailing unit, which allows the manoeuvrability of the vehicle combination to be improved.

Optionally in some examples, including in at least one preferred example, the cost comprises a cost associated with a power loss of the trailing unit as a function of the steering angles for the steered axles of the trailing unit. A technical benefit may include that power loss is taken into consideration when determining the optimum steering angles for the trailing unit, which allows the energy efficiency of the vehicle combination to be improved.

Optionally in some examples, including in at least one preferred example, the cost comprises a cost associated with tyre wear of the trailing unit as a function of the steering angles for the steered axles of the trailing unit. A technical benefit may include that tyre wear is taken into consideration when determining the steering angles, which allows tyre wear to be decreased and the life expectancy of the tyres of the vehicle combination to be increased.

Optionally in some examples, including in at least one preferred example, the processing circuitry is further configured to express the cost associated with lateral slip losses as a function of a steering angle of at least one intermediate axle of the trailing unit and a value for the steering angle of the at least one intermediate axle is further determined such that the cost is below the threshold, wherein the at least one intermediate axle is located between the frontmost and the rearmost axle. A technical benefit may include that optimal angles for at least one intermediate axle in the trailing unit may be determined, whereby the trailing unit is enabled to more effectively follow the turning path of the tractor unit while lateral forces acting on the tyres of the trailing unit are further reduced and tyre scrubbing further reduced.

Optionally in some examples, including in at least one preferred example, the value for the first steering angle is in an opposite direction to the value for the second steering angle. A technical benefit may include that the lateral forces that act on the axles of the trailing unit during a turn are compensated for such that the trailing unit can better align with the desired path, whereby lateral slip is reduced and power losses are reduced.

Optionally in some examples, including in at least one preferred example, the processing circuitry is further configured to express the cost as a function of vehicle speed. A technical benefit may include that by taking speed into consideration when determining the steering angles, a balance between manoeuvrability and energy efficiency is allowed as an increased speed is correlated to a reduced maximum swept path width but at the expense of increased lateral power losses, which may be beneficial for certain road conditions.

Optionally in some examples, including in at least one preferred example, the processing circuitry is configured to determine the values for the steering angles using a vehicle model. A technical benefit may include that the steering angles can be determined in an accurate manner based on a model which accurately predicts vehicle behaviour and estimates the space and power required for a specific manoeuvre.

Optionally in some examples, including in at least one preferred example, the processing circuitry is configured to determine the values for the steering angles using a model predictive controller. A technical benefit may include that steering angles may be optimised such that maximum swept path, power loss due to lateral slip, and tyre wear due to scrub losses are reduced.

Optionally in some examples, including in at least one preferred example, the model predictive controller has a control strategy based on capabilities and constraints for the vehicle combination. A technical benefit may include that the control actions generated by the model predictive controller are safe, efficient, and optimal for the specific vehicle.

Optionally in some examples, including in at least one preferred example, the processing circuitry is further configured to provide the determined steering angle values to a control system configured to determine one or more control inputs for the vehicle combination. A technical benefit may include that motion of the vehicle combination may be controlled autonomously in a safe and accurate manner based on the determined steering angle values.

According to a second aspect of the disclosure, there is provided a vehicle combination comprising the computer system of any preceding claim. The second aspect of the disclosure may seek to provide a vehicle combination capable of determining the optimal steering angles for steered axles of a trailing unit if the vehicle combination based on an objective. A technical benefit may include that the determined steering angles may be implemented in the trailing unit such that power losses may be reduced and energy efficiency of the vehicle combination during low speed manoeuvring may be improved.

According to a third aspect of the disclosure, there is provided a computer-implemented method for determining steering angles for steered axles of a trailing unit of a vehicle combination, the method comprising: expressing, by processing circuitry of a computer system, a cost associated with lateral slip losses of the trailing unit as a function of a first steering angle of a frontmost axle of the trailing unit and a second steering angle of a rearmost axle of the trailing unit; and determining, by the processing circuitry, a value for the first steering angle and a value for the second steering angle such that the cost is below a threshold, wherein the first steering angle and the second steering angle enable the trailing unit to travel a curve of a given turning radius.

The third aspect of the disclosure may seek to provide a computer-implemented method for determining the optimal steering angles for steered axles of a trailing unit of a vehicle combination to travel a curve of a given radius with low, e.g. minimal, lateral slip losses. A technical benefit may include that the steering angles determined by the method may be implemented in the trailing unit such that power losses may be reduced and energy efficiency of the vehicle combination during low speed manoeuvring may be improved.

According to a fourth aspect of the disclosure, there is provided a computer program product comprising program code for performing, when executed by the processing circuitry, the computer-implemented method. The fourth aspect of the disclosure may seek to enable new vehicles and/or legacy vehicles to be conveniently configured, by software installation/update, to determine optimal steering angles for steered axles of a trailing unit of a vehicle combination to travel a curve of a given radius with low, e.g. minimal, lateral slip losses.

According to a fifth aspect of the disclosure, there is provided a non-transitory computer-readable storage medium comprising instructions, which when executed by the processing circuitry, cause the processing circuitry to perform the computer-implemented method. The fifth aspect of the disclosure may seek to enable new vehicles and/or legacy vehicles to be conveniently configured, by software installation/update, to determine optimal steering angles for steered axles of a trailing unit of a vehicle combination to travel a curve of a given radius with low, e.g. minimal, lateral slip losses

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognised by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1A** schematically shows a side view of a vehicle combination according to an example of the disclosure.
**FIG. 1B** schematically shows a top view of a vehicle combination according to an example of the disclosure.
**FIG. 2** schematically shows, in terms of functional blocks, a control system for a vehicle according to an example of the disclosure.
**FIG. 3** is a flow chart of a computer-implemented method according to an example.
**FIG. 4** is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

When a vehicle is propelled forward, various types of power losses occur. One type of power loss is tyre slip losses, which can further be categorised into lateral and longitudinal tyre slip losses. The type of tyre loss depend on how the vehicle is being manoeuvred. For a vehicle combination being manoeuvred at low speed, for example during a turn, lateral slip losses on the trailing units is a particular problem. Limiting these power losses is important in order to control vehicle combinations more safely and efficiently.

To remedy this, systems and methods are proposed for determining steering angles for steered axles of a trailing unit of a vehicle combination, wherein the determined steering angles enable the trailing unit to travel a curve of a given turning radius. In particular, the steering angles of axles of the trailing unit are determined by expressing a cost associated with lateral slip losses of the trailing unit as a function of the steering angles. The steering angles are then determined such that the cost is below a threshold, e.g. minimised, and transmitted to a control system of the vehicle combination. In this way, the vehicle can then be controlled to travel a curve while reaching an objective, such as reducing lateral slip losses, reducing swept path and/or reducing tyre wear. This is particularly advantageous in the case of autonomously control vehicles.

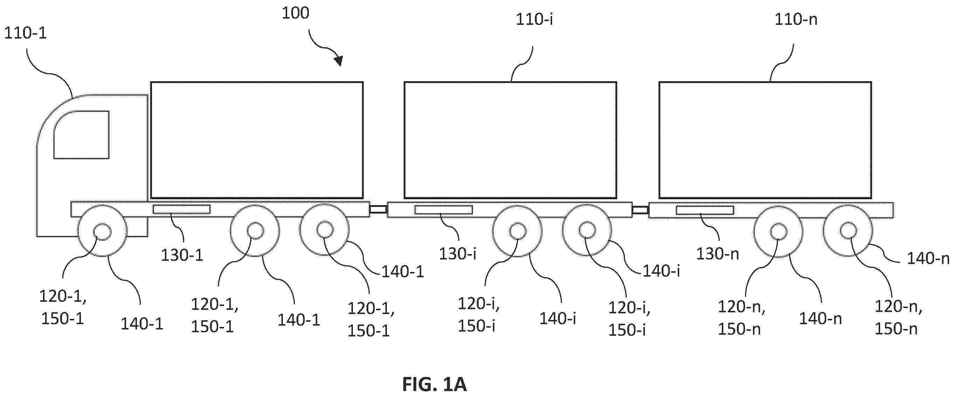

**FIG. 1A** schematically shows a side view of an example vehicle combination **100** of the type considered in this disclosure. The vehicle combination **100** comprises a number of units **110,** including a tractor unit and at least one trailing unit. Each unit **110** may be given an index $i$, and the total number of units **110** in a vehicle combination **100** is designated $n$. Whilst two trailing units are shown, it will be appreciated that the vehicle combination **100** may comprise more or fewer trailing units connected to each other. This gives rise to different types and designations of vehicle combinations.

A tractor unit, such as the tractor unit **110-1,** is generally the foremost unit in a vehicle combination **100,** and may comprise the cabin for the driver, including steering controls, dashboard displays and the like. Generally, the tractor unit **110-1** is used to provide propulsion power for the vehicle combination **100.** In the example of **FIG. 1A,** the tractor unit **110-1** may also be used to store goods that are being transported by the vehicle combination 100.

A trailing unit, such as the trailing units **110-i, 110-n,** is generally used to store goods that are being transported by the vehicle combination **100.** A trailing unit may be a truck, trailer, dolly and the like. A trailing unit may also provide propulsion to the vehicle combination 100. A trailing unit without a front axle, such as the trailing units **110-i, 110-n,** is known as a semi-trailer. In vehicle combinations such as that shown in **FIG. 1A,** vehicle motion management is available on a unit level to receive requests from a manual or virtual driver to coordinate the propulsion, braking and steering.

Whilst three tractor axles and two axles per trailing unit **110-i** are shown, it will be appreciated that any suitable number of axles may be provided on the respective units **110.** It will also be appreciated that any number of the tractor axles and/or trailer axles may be driven axles, including zero (i.e. one of the units may include at least one driven axle while the other does not).

The axles of the vehicle units can be either steered or non-steered. The front axle of the tractor unit **110-1** is typically steered, allowing the driver to control the direction of the entire combination, while its rear axles are generally non-steered and provide traction. Axles of the trailing units **110-i** may be steered or non-steered. Non-steered axles follow the path of the tractor unit **110-1,** and while they are simple and durable, it increases the risk of tyre scrubbing during sharp turns, whereby tyre wear is increased and a larger turning radius required. In contrast, steered axles improve manoeuvrability by allowing the trailer wheels to turn, thereby allowing the trailing units **110-i** to follow the tractor unit **110-1** more closely.

Steered axles may be either passively or actively steered. During passive steering, the wheels automatically adjust based on the forces that occur during manoeuvring of the vehicle. During active steering, the steering angles of the axles are actively controlled by electronic or hydraulic systems. Active steering enables the manoeuvrability of a vehicle combination to be improved, especially when navigating tight corners or narrow spaces. In multi-unit vehicle combinations, active steering may optimise the alignment of the trailer axles, allowing the trailing unit **110-i** to turn more effectively, while reducing tyre wear and lateral forces.

The vehicle combination **100** may comprise one or more sources of propulsion. For example, on or more of the units **110** may comprise one or more electrical machines **120** such as electric motors. Each unit **110** may comprise one or more batteries **130** configured to provide power to the electrical machines **120**. A vehicle combination **100** that uses only battery power is a BEV. In some examples, for example in the case of an HEV, a unit **110,** most often a tractor unit **110-1,** may also include another source of propulsion, for example an internal combustion engine (ICE). The vehicle combination **100** also comprises a drivetrain (not shown) to deliver mechanical power from the propulsion source (the electrical machines **120** or the ICE) to the wheels **140**. All units **110** may provide propulsion to the vehicle combination **100**. In the examples discussed herein, the vehicle combination **100** may be a BEV or an HEV.

The electrical machines **120** are configured to drive, e.g. provide torque and/or steering to, one or more axles or individual wheels **140** of the unit **110**. The electrical machines **120** of a unit **110** can supply either a positive (propulsion) or negative (braking) force. Furthermore, each unit **110** may comprise one or more sets of service brakes **150**. The ICE, electrical machines **120** and service brakes **150** are considered as actuators of the vehicle combination **100**. Other actuators may also be present. For example, steering actuators **150,** such as steering servo arrangements, may be provided, and may be implemented as electro-hydraulic actuators. Each actuator in a given unit **110** may be given an index k, and the total number of actuators in a given unit **110** is designated m. It will be appreciated that each axle and/or wheel **140** may have an associated electrical machine **130,** set of service brakes **150,** and/or set of steering actuators **150**.

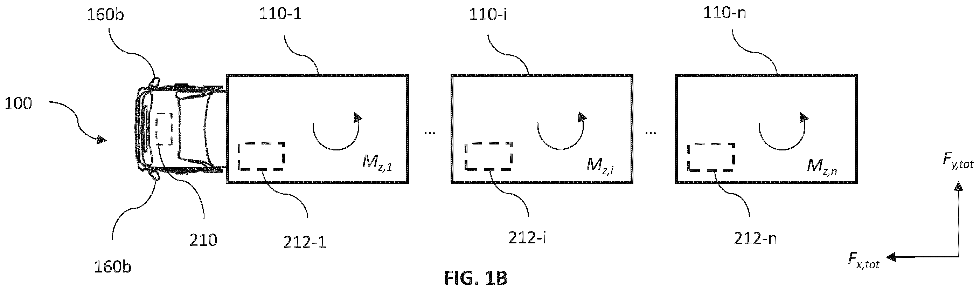

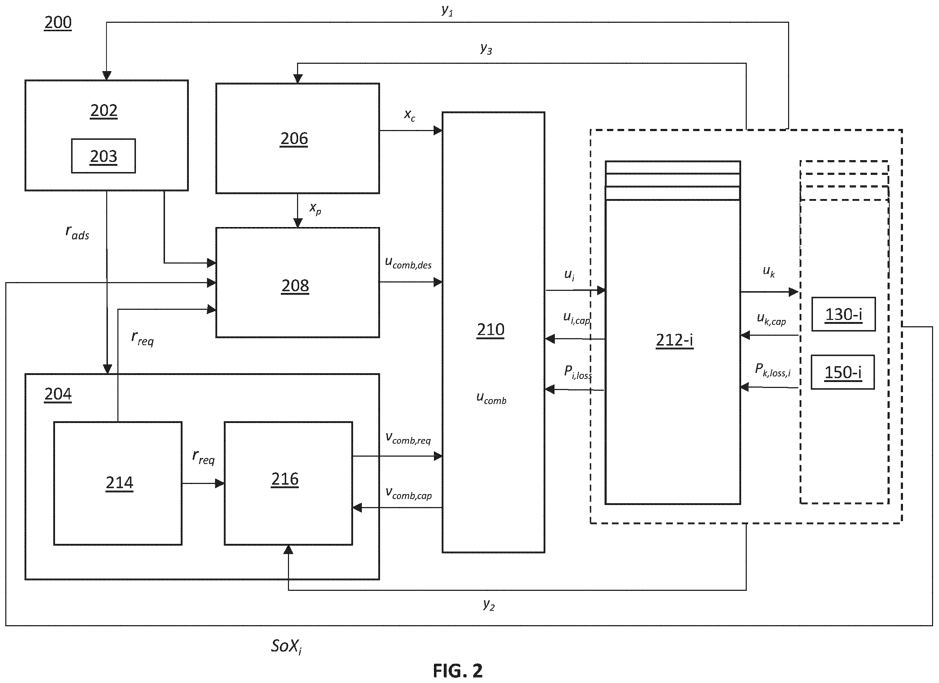

**FIG. 1B** schematically shows a top view of an example vehicle combination **100** of the type considered in this disclosure. Similarly to the example of **FIG. 1A,** the vehicle combination **100** comprises a number of units **110,** including a tractor unit and a plurality of trailing units. **FIG. 1B** also shows the requested global forces of the vehicle combination **100** as a whole. Examples of requested global forces of the vehicle combination **100** as a whole may e.g. include a total longitudinal/axial force $F_{x,tot}$, a total lateral/radial force $F_{y,tot}$, and/or one or more yaw moments $M_{z,i}$ for the respective vehicle units **110**. In order to control motion of a vehicle combination **100,** the requested global forces of the vehicle combination **100** must be determined and resolved. This may be achieved by a control system **200** (shown in **FIG. 2)** of the vehicle combination **100** that determines control signals based on a requested reference input and certain operating conditions of the vehicle combination **100**.

In the example of **FIG. 1B,** the vehicle combination **100** includes a combination control allocator **210** and a plurality of unit control allocators **212**. The combination control allocator **210** and the various unit specific control allocators **212** together form a distributed control allocation system for the vehicle combination **100**. In this system, the control allocation may be performed on multiple levels, i.e. first on a level of the vehicle combination **100** as a whole, and then on a level of each vehicle unit **110** individually. The combination control allocator **210** may be provided (as shown) as part of the tractor unit **110-1,** while the unit control allocators **212** are provided as part of each individual unit **110**. It will be appreciated that the combination control allocator **210** may be provided as part of any unit **110** of the vehicle combination **100**.

**FIG. 2** schematically shows, in terms of functional blocks, an example control system **200** for a vehicle, such as the vehicle combination **100**. The control system **200** serves to perform various functions of the vehicle combination **100,** such as power management and motion coordination. The control system **200** comprises a tactical layer **202,** a target generator **204,** a state estimator **206,** an energy manager **208,** a combination control allocator **210** and a plurality of unit control allocators **212**. The combination of the target generator **204,** the state estimator **206,** and the energy manager **208,** may be referred to as a vehicle motion controller (VMC) of the vehicle combination **100**.

The tactical layer **202** is responsible for ensuring that the trajectory for the whole combination **100** is obstacle free and collision free. The tactical layer **202** may also be referred to as an automated driving system (ADS) of the vehicle combination **100**. For example, the tactical layer **202** may determine a trajectory for the vehicle combination **100** that ensures that a swept path of the vehicle combination **100** and the individual units **110** is safe and achievable. Swept path refers to the total area or space that a vehicle occupies on the ground while making a turn. It accounts for the difference between the path taken by the front and rear wheels, especially in articulated vehicles like vehicle combinations. In such vehicles, the rear wheels, if not steered, do not precisely follow the paths traced by the front wheels, resulting in a measurable degree of inward deviation known as off-tracking. Moreover, even if axles are steered such that all wheels align their tracks, the vehicle's footprint during the turn exceeds its width, as parts of the vehicle will extend inward beyond the paths of the wheels. Swept path width is the maximum width of the swept path between outermost and innermost points of the vehicle combination in a turn or curve and it is a critical parameter for improving the manoeuvrability of vehicle combinations.

To this end, the tactical layer **202** may provide an input $r_{ads}$ relating to a manoeuvre in an autonomous driving case. The input $r_{ads}$ may include requests such as target distance, velocity, acceleration, and curvature (steering) for the vehicle combination **100**. These may be scalar values or vectors with evolutions for a given prediction horizon. The trajectory may be determined by the tactical layer **202** based on hard constraints for the vehicle combination **100**, as will be discussed below. The tactical layer **202** may also send determined future performance limits for the vehicle combination **100**.

The tactical layer **202** may also send requests for power and energy management to optimise range and mission performance. For example, the tactical layer **202** may also include predictive energy management, including battery targets, capabilities and statuses that determine how the energy sources of the vehicle combination **100** should be used for a whole mission.

In some examples, the tactical layer **202** comprises a vehicle model **203**. The vehicle model **203** is a model of the vehicle combination **100** intended to plan trajectories of the vehicle combination **100**. As such, the vehicle model **203** can be used to determine the input $r_{ads}$. The vehicle model **203** may include different parameters of the vehicle combination **100** such as capabilities, structural parameters, and dynamic parameters of the vehicle combination **100**, and be capable of determining the forces acting on the vehicle combination **100**. The vehicle model **203** can be any suitable model, for example a model known in the art. The vehicle model **203** can be based on real tests, computer model simulations, a machine-learning model, or other suitable means known in the art. The vehicle model **203** may be, for example, a single-track model (i.e., left and right wheels on a given axle are considered together), such as a bicycle model. The vehicle model **203** may alternatively be a more complex model such as a dual track model (i.e., left and right wheels on a given axle are considered separately). The real units can have axle groups with several axles, but in the model they may be considered together. A tyre model can be used in combination with the vehicle model **203**. The tyre model may take into account the cornering stiffness of the tyres of the vehicle combination **100**. The vehicle model **203** may be configured to operate within an agreed operational design domain (ODD) and a specified safe operating envelope (SOE) for the vehicle combination **100**. The vehicle model **203** may therefore include vehicle motion management logic that includes capabilities of the vehicle combination **100** and the SOE to avoid instabilities such as rollover, jack-knife, and/or an unsafe swept path width.

The vehicle model **203** may be time-invariant or time variant, based on certain parameters of the vehicle combination **100**. To this end, the tactical layer **202** may receive parameters $y_1$ of the vehicle combination **100** from the vehicle combination **100** and/or the individual units **110**. The parameters $y_1$ may include capabilities, structural parameters, and/or dynamic parameters of the vehicle combination **100**.

The vehicle capabilities comprise at least one of a maximum range capability, a maximum operational time capability, a longitudinal acceleration minimum, a longitudinal acceleration maximum, a longitudinal acceleration rate minimum, a longitudinal acceleration rate maximum, a longitudinal velocity minimum, a longitudinal velocity maximum, a longitudinal distance minimum, a longitudinal distance maximum, 5 a yaw rate minimum, a yaw rate maximum, a yaw acceleration minimum, a yaw acceleration maximum, a longitudinal velocity maximum for uphill slopes, and a longitudinal velocity maximum values for downhill slopes. While the maximum range capability relates to total distance that the vehicle can travel, the longitudinal distance minimum/maximum refers to a relatively short distance, for example for shunting in a logistic context for moving a vehicle in a yard, or for a safe stop. In some examples, the capabilities are functions of capability parameters.

The structural parameters of the vehicle combination 100 comprise at least one of a type of the vehicle combination **100**, a number of units **110** of the vehicle combination **100**, a number of axles in each unit **110**, a tyre type in each axle group, a distance of each axle of each unit **110** to the first axle and coupling points of the unit **110**, the number of steered axles in each unit **110**, the number of propelled axles in each unit **110**, the number of liftable axles in each unit **110**, nominal diameters of the wheels **140**, a track of each axle, a mass of the unladen vehicle combination **100**, and a centre of gravity of the unladen vehicle combination **100**. The type of the vehicle combination **100** may be defined by different types of coupling used in the vehicle combination **100**. The tyre type may be defined by a tyre stiffnesses, a peak friction/ slip parameter of the tyre, and/or other parameters used in known tyre models such as the Pacejka Magic Formula or a brush model.

The dynamic parameters of the vehicle combination **100** comprise at least one of a mass of each unit **110**, a load on each axle, an inertia of each unit **110**, a lumped cornering stiffness of each axle, a rolling resistance of each axle, a distance of a dynamic centre of gravity from the first axle of each unit **110**, and an air drag property. The inertia may be expressed in three directions, although the vertical direction is most relevant for trajectory planning as it represents the yaw moment of inertia, which is relevant for the yaw-plane motion of the vehicle combination **100**. The air drag property may include am effective surface of the vehicle combination **100** for different wind directions.

Based on these received parameters $y_1$ of the vehicle combination **100**, the vehicle model **203** can be updated to reflect the current state of the vehicle combination **100**. This can be advantageous in autonomous driving of multi-unit vehicle combinations, as it may enable safe and precise trajectory planning, which is not trivial due to the complexity in their dynamics and interactions between units **110**. For instance, an updated vehicle model **203** can enable a swept path of both the vehicle combination **100** and individual units **110** to be maintained within a safe range. Additionally, the vehicle model **203** can be applied to assess rough timing, determining how long the vehicle combination **100** can be used.

The tactical layer **202** can also be used to select an operating mode (otherwise known as a thermal management mode) for the vehicle combination **100**. The operating modes may include an "Eco" mode or "Range" mode, in which acceleration and top speed of the vehicle combination **100** can be limited to optimise energy efficiency and maximise range, an "Endurance" mode, intended to enable a vehicle combination **100** to operate for a long duration, a "Performance" mode, configured to provide maximum acceleration and top speed, and an "I-know" mode, in which pre-set configurations for the vehicle combination **100** can be adjusted appropriate to desired performance.

The tactical layer **202** can interface with vehicle motion management components of the control system **202**, in particular the target generator **204**. As discussed above, the tactical layer **202** may provide an input $r_{ads}$ relating to a manoeuvre to the target generator **204**. In some instances, the input $r_{ads}$ may be determined by the vehicle model **203** based on the current parameters $y_1$ received from the vehicle combination **100**. This interface ensures that motion in a reference coordinate system can be requested by the tactical layer **202** within the capabilities of the vehicle combination **100** to ensure safe and efficient motion control. This enables fully automated driving with redundancy and vehicle safety.

The purpose of the target generator **204** is to determine a requested reference input $r_{req}$ and a requested combination control input $v_{comb,req}$ for the vehicle combination **100**. The requested reference input $r_{req}$ is determined based on an input related to a manoeuvre for the vehicle combination **100**, for example the input $r_{ads}$ from the vehicle model **203** of the tactical layer **202**, and represents a requested movement of the vehicle combination **100**. The requested combination control input $v_{comb,req}$ can be determined based on the requested reference input $r_{req}$ and/or the input $r_{ads}$. The requested combination control input $v_{comb,req}$ can also be determined based on a motion capability $v_{comb,cap}$ for the vehicle combination **100**. The target generator **204** comprises a path planner/controller **214** and a force generator **216**.

In particular, the target generator **204** may receive an input related to a manoeuvre for the vehicle combination **100**. The manoeuvre may be, for example, to travel a curve of a given turning radius, straight-line driving, braking and the like. The target generator **204** may receive data from, for example, a steering wheel and/or gas/brake pedal of the combination **100**, indicating that the driver (or some other system of the vehicle combination **100**) wants to change the direction and/or the speed of the vehicle combination **100** in a certain way. This may be the case in a semiautonomous driving scenario. In some examples, the input may originate from elsewhere, for example any other system that may provide some indication of how the overall forces of the vehicle combination **100** are to be influenced (e.g. steered, propelled or braked). For example, the data may originate from a lane assist system, a lane following system, an emergency steering system, an emergency braking system, an automated or semi-automated drive system.

In one particular example, the target generator **204** may receive the input $r_{ads}$ from the vehicle model **203** of the tactical layer **202**. This may be the case in a fully autonomous driving scenario. Based on this input, the target generator **204** may output a requested reference input $r_{req}$. In particular, the path planner/controller **214** determines the requested reference input $r_{req}$. The requested reference input $r_{req}$ may comprise at least one of a longitudinal acceleration $a_x$ of the vehicle combination **100** as a whole or of a unit **110** of the vehicle combination **100** (for example the unit **110** comprising the combination control allocator **210**), a longitudinal velocity $v_{x1}$ of a tractor unit **110-1**, a lateral velocity $v_{y1}$ of the tractor unit **110-1**, a yaw rate $\omega_{zi}$ of at least one unit **110** of the vehicle combination **100**, and a steering angle $\delta_{f,req}$ of the tractor unit **110-1**. In some examples, the target generator **204** may also receive determined future performance limits for the vehicle combination **100**.

The requested combination control input $v_{comb,req}$ is determined by the force generator **216**. The requested combination control input $v_{comb,req}$ can be determined based on the requested reference input $r_{req}$, or based on the input $r_{ads}$ directly. In the latter case, the path planner/controller **214** can be used to determine a requested reference input $r_{req}$ for shorter term motion, for example by up-sampling the requests $r_{ads}$ from the tactical layer **202** that may be sent infrequently (e.g. every second or so). The requested combination control input $v_{comb,req}$ may include requested motion parameters for the vehicle combination **100**. In particular, the forces $F_{tot,req}$ and/or moments $M_{z,tot,req}$ that need to be applied to the vehicle combination **100** as a whole in order to follow the requested reference input $r_{req}$ are determined. The requested motion parameters included in the requested combination control input $v_{comb,req}$ of the vehicle combination **100** may comprise at least one of a requested longitudinal force $F_{x,tot,req}$ of the vehicle combination **100**, a requested lateral force $F_{y,tot,req}$ of the vehicle combination **100**, a requested longitudinal coupling force $F_{cxi,req}$ between consecutive units **110**, and a requested lateral coupling force $F_{cyi,req}$ between consecutive units **110**. These make up the total requested force to be applied $F_{tot,req}$ for the vehicle combination **100**. The motion parameters included in the requested combination control input $v_{comb,req}$ of the vehicle combination **100** may also comprise a requested yaw moment $M_{z,i,req}$ for one or more units **110**.

The requested combination control input $v_{comb,req}$ may also be determined based on state information $y_2$ from the different units **110** of the vehicle combination **100** and a motion capability $v_{comb,cap}$ for the vehicle combination **100**. The state information $y_2$ may include information from sensors of the vehicle combination **100** such as wheel speed sensors, inertial measurement units, articulation angle sensors and the like. The motion capability $v_{comb,cap}$ of the vehicle combination **100** may describe the limits of motion parameters for safe operation of the vehicle combination **100**. The motion capability $v_{comb,cap}$ may comprise at least one of a longitudinal force capability $F_{x,tot,cap}$ of the vehicle combination **100**, a lateral force capability $F_{y,tot,cap}$ of the vehicle combination **100**, and a yaw moment capability $M_{z,i,cap}$ for one or more units **110**. The state information $y_2$ may also include structural parameters of the vehicle combination **100** as discussed above in relation to parameters $y_1$.

The requested combination control input $v_{comb,req}$ may be determined based on a vehicle model. The vehicle model can be any suitable model, for example a model known in the art. The model can be based on real tests, computer model simulations, a machine-learning model, or other suitable means known in the art. The vehicle model may provide motion prediction of the vehicle combination **100** by looking at previous steering input and acceleration input. The prediction may include instabilities such as understeer or rollover risk, for example within a one-second horizon. The model may be, for example, a single-track model, i.e., left and right wheels on a given axle are considered together. The real units can have axle groups with several axles, but in the model they are considered together. A tyre model can be used in combination with the vehicle model. The tyre model may take into account the cornering stiffness of the tyres of the vehicle combination **100.**

The state estimator **206** is responsible for processing state information $y_4$ from the different units **110** of the vehicle combination **100.** For example, the state estimator **206** may receive information from sensors of the vehicle combination **100** such as wheel speed sensors, inertial measurement units, articulation angle sensors and the like and use this information to determine states for the vehicle combination **100** and the various units. The state estimator **206** may then output unit-specific state information $x_p$ to the energy manager **208** and unit-specific state information $x_c$ to the combination control allocator **210.**

The energy manager **208** determines a power split between the different units **110** of the vehicle combination **100.** The energy manager **208** may also determine a power split within each unit **110,** meaning how the power demand is divided between the actuators (for example, the ICE, the electrical machines **120,** service brakes **150,** and/or steering actuators) of the unit **110.** Inputs to the energy manager **208** include the requested reference input $r_{req}$ from the target generator **204** and the statuses $SoX$ of the batteries **130** of the vehicle combination **100.** The energy manager **208** determines a power allocation and an associated power allocation input $u_{comb,des}$. The power split may be determined based on the state of energy rate ($SoE$) for each unit **110** and/or the longitudinal part of the requested force for the unit's propulsion system $F_{xpi,req}$. The energy manager **208** may consider factors that affect long-term energy consumption, such as road slopes, SoC states, charger locations, and the like, and determine power behaviour as a function of the energy over time. The energy manager **208** may also be configured as a power manger. For example when a time horizon is considered, it may handle energy. When instantaneous values are considered, it may handle power.

Based on these values, the control allocators **210, 212** may determine control data that meets the requested global forces of the vehicle combination **100** to meet certain constraints, such as power management (optimising battery usage) and safety constraints (ensuring that the trajectory for the whole combination **100** is obstacle free and collision free). In particular, the control allocators **210, 212** determine how various actuators (for example, the ICE, the electrical machines **120,** service brakes **150,** and/or steering actuators) of the vehicle combination **100** are to be controlled in order to generate requested global forces of the vehicle combination **100** as a whole. The combination control allocator **210** and the various unit specific control allocators **212** together form a distributed control allocation system for the vehicle combination **100.** In this system, the control allocation is performed on multiple levels, i.e. first on a level of the vehicle combination **100** as a whole, and then on a level of each vehicle unit **110** individually.

The combination control allocator **210** transforms the requested combination control input $v_{comb,req}$ from the target generator **204** into an allocated combination control input $u_{comb}$ for the vehicle combination **100,** describing appropriate motion parameters for each unit **110.** The allocated combination control input $u_{comb}$ of the vehicle combination **100** comprises the forces $F$ and/or moments $M$ to be applied for the vehicle combination **100.** The allocated combination control input $u_{comb}$ comprises allocated unit control inputs $u_i$ describing the forces and/or moments that each respective unit **110** is to produce in order to provide the allocated combination control input $u_{comb}$ of the vehicle combination **100.** The allocated unit control inputs $u_i$ may comprise a force control input for the unit's propulsion system $F_{pi}$, and a force control input for the unit's braking system $F_{bi}$.

The unit control allocators **212** comprise a specific control allocator **212** for each unit **110** of the vehicle combination **100.** The unit-specific allocated control inputs $u_i$ that are output from the combination control allocator **210** are transformed into actuator-specific allocated control inputs $u_k$, describing actual actuator commands by the unit-specific control allocators **212.** For example, the unit-specific control allocators **212** map the forces and moments of each unit **110** into the steering and drive/brake torques to be applied at the wheels of each unit **110.** To do this, the unit control allocators **212** may determine a requested force control input for the unit's propulsion system $F_{pi}$ and a requested force control input for the unit's braking system $F_{bi}$. The unit control allocators **212** then determine the actuator-specific allocated control inputs $u_k$ accordingly, which comprise allocated force control inputs for the individual actuators of the unit's different systems.

In some examples, each unit **110** may be capable of estimating its own capabilities $u_{i,cap}$, e.g. how much and/or how fast the unit **110** can move at a current time instant. Each unit **110** may also be capable of estimating its own power losses $P_{i,loss}$. The unit power losses $P_{i,loss}$ may comprise a power loss for its propulsion system $P_{pi,loss}$ and a power loss for its braking system $P_{bi,loss}$. This may be based on an actuator power losses $P_{k,loss,i}$ for each actuator in the unit **110** as well as other power losses in the unit **110,** such as power losses in the batteries and the drivetrain. The actuator power losses

$P_{k,loss,i}$ comprise a power loss for propulsion actuators $P_{pk,loss,i}$ (e.g. electrical machines **120,** ICE, and/or other propulsion sources) and a power loss for braking actuators $P_{bk,loss,i}$ (e.g. electrical machines **120** and/or service brakes **150).** The actuators of each unit **110** may provide the actuator power losses $P_{k,loss,i}$ to the respective unit control allocator **212-i,** which provides unit power losses $P_{i,loss}$ to the combination control allocator **210.**

There are various other types of power losses that the drivetrain of a vehicle combination must overcome to propel the vehicle forward, such as rolling resistance losses, aerodynamic losses and tyre slip losses. Rolling resistance losses occur when energy is dissipated as a tyre rolls across a road surface and deforms at the contact area with the road surface. The energy expenditure this requires creates a force that opposes the vehicle's motion, referred to as rolling resistance. Aerodynamic losses occur as the vehicle moves through air, whereby an aerodynamic drag force acts in the opposite direction to the vehicle's direction of motion. Tyre slip losses occur when a tyre loses full traction with the road surface.

Tyre slip losses can further be categorised into lateral and longitudinal tyre slip losses. Losses due to longitudinal slip can be estimated by longitudinal and vertical forces on driven wheels or axles. For a vehicle combination, longitudinal slip losses primarily affect the driven axles of the tractor unit, as they are responsible for transferring torque from the engine to the road surface. Lateral slip losses refer to the energy and efficiency losses that occur due to the lateral forces acting on the tyres and axles of the vehicle during low-speed manoeuvres, for example during a turn.

Lateral slip losses are primarily due to tyre scrubbing, which refers to the lateral movement or sliding of a vehicle's tyres across the road surface when they move in a direction that is not aligned with their natural rolling path. This typically occurs during sharp turns or when there is misalignment between axles or tyres. As a vehicle is manoeuvred to make a turn, the lateral forces acting on the tyres increase, which causes the tyres to slip or scrub against the road surface, leading to increased friction and greater tyre wear. This is particularly common in situations where the wheels are not able to follow the natural arc of a turn, such as in vehicle combinations where the axles have fixed, non-steered wheels.

In order to improve manoeuvrability and energy efficiency of a vehicle combination during low speed manoeuvring, it is desirable to be able to predict or estimate costs associated with lateral slip losses of a vehicle combination, e.g. by the ADS or VMC of a vehicle combination **100.**

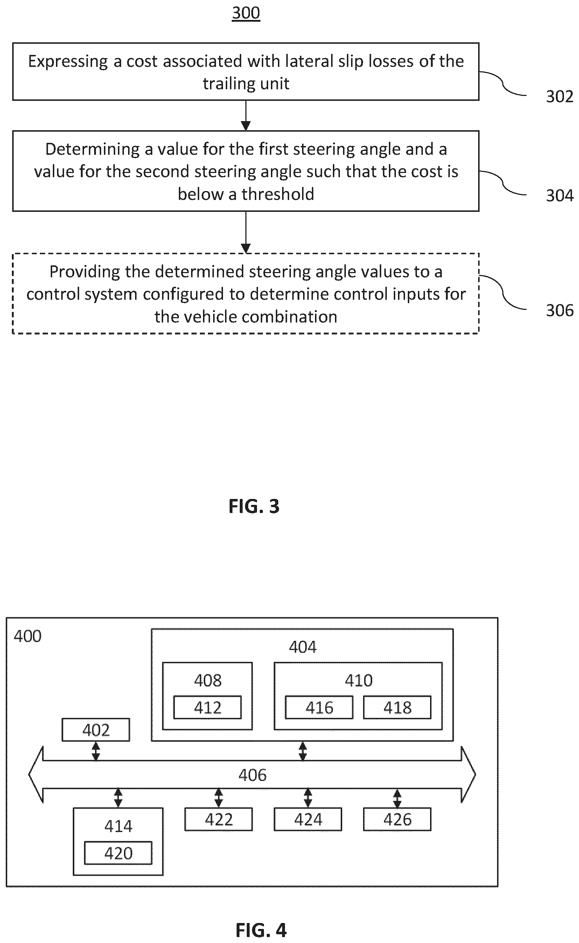

**FIG. 3** is a flow chart of a computer-implemented method **300** according to an example. The method **300** is for determining steering angles for steered axles of a trailing unit **110** of a vehicle combination, such as the vehicle combination **100.** The method **300** enables steering angles to be determined for use in controlling a vehicle combination to travel a curve of a given turning radius, while reducing the lateral slip losses and enhancing manoeuvrability of the trailing unit. The method **300** may be implemented by processing circuitry of a computer system (e.g., the control system **200** described in relation to **FIG. 2).**

At **302,** a cost, $P_{slip,y}$, associated with lateral slip losses of the trailing unit **110-i** is expressed as a function of a first steering angle, $\delta_{front}$, of a frontmost axle of the trailing unit **110-i** and a second steering angle, $\delta_{rear}$, of a rearmost axle of the trailing unit **110-i.** The function enables power losses due to lateral slip for given steering angles $\delta$ to be calculated. The relationship between steering angles and lateral slip losses may expressed by the following optimization problem using the arg min function, however the cost may be expressed using any suitable function:

$$\delta_i^* = \arg\ \min\ (P_{slip,y}(\delta_i)) \qquad (1)$$

Herein, $\delta_i$ represents a vector of initial steering angle values for vehicle unit i, and $\delta_i^*$ represents optimised steering angle values which may be determined using the function. For example, for a vehicle combination comprising a tractor unit and a trailing unit with a frontmost and a rearmost steered axle, wherein the trailing unit is vehicle unit 2, the cost $P_{slip,y}$ is expressed as a function of vector $\delta_2 = [\delta_{21}\ \delta_{22}]$. In vector $\delta_2$, angle $\delta_{21}$ represents an initial steering angle value for the frontmost axle of the trailing unit, i.e. $\delta_{front}$, and $\delta_{21}$ represents an initial steering angle value for the rearmost axle, i.e. $\delta_{rear}$. Expressing a cost associated with the lateral slip losses as a function of steering angles of the trailing unit **110-i** in this way enables optimised steering angles $\delta_i^*$ to be determined in order to improve performance, reduce power losses, and improve vehicle safety and efficiency.

The cost, $P_{slip,y}$, may comprise a plurality of costs. In one embodiment, the cost, $P_{slip,y}$, may comprise a cost, $P_{swept}$, associated with a swept path of the trailing unit **110-i** as a function of the steering angles for the steered axles of the trailing unit **110-i.** Swept path relates to the maximum width of the swept path between outermost and innermost points of the vehicle combination in a turn. The swept path will increase with an increasing turning radius, whereby the vehicle will require more space to perform the turn. Consequently, reducing swept path width and thus the cost associated with a swept path is important for optimising manoeuvrability of a vehicle combination.

In one embodiment, the cost, $P_{slip,y}$, may comprise a cost, $P_{power}$, associated with a power loss of the trailing unit **110-i** as a function of the steering angles for the steered axles of the trailing unit **110-i.** As discussed above, a vehicle combination **100** is subject to various types of power losses, with lateral slip losses being of particular importance during low-speed manoeuvres of vehicle combinations. The cost $P_{power}$ associated with a power loss may be expressed as:

$$P_{power}(\delta_i) = \mathrm{LSRC}_i(\delta_i) * F_{zi} * v_{xi} \tag{2}$$

Herein, $\delta_i$ represents the vector of initial steering angle values as discussed above, $F_{zi}$ represents the vertical force on one or more axles of the vehicle and $v_{xi}$ represents longitudinal vehicle speed. *LSRC* is a lateral slip resistance coefficient, a function that represents lateral slip losses. The lateral slip resistance coefficient is dependent on a plurality of parameters and individual to each vehicle unit **110**. It may be acquired, for example, from a lookup table. The lateral slip resistance coefficient can be used to calculate lateral slip losses for a specific vehicle (unit) performing a specific manoeuvre, and provides a reliable approximation of lateral slip losses during a turning manoeuvre.

In one embodiment, the cost, $P_{slip,y}$, may comprise a cost, $P_{wear}$, associated with tyre wear of the trailing unit **110-i** as a function of the steering angles for the steered axles of the trailing unit **110-i**. As discussed above, when a vehicle combination **100** is manoeuvred to make a turn, lateral forces act on the tyres of the trailing unit **110-i**. This may cause the tyres to slip or scrub against the road surface, leading to increased friction and tyre wear. The amount of tyre wear on the wheels of an axle depend on how the vehicle is manoeuvred and if the axle is steered or not. By determining steering angles for steering the axles of the trailing unit **110-i** during turns, the lateral forces acting on the tyres may be reduced, which significantly reduces tyre wear. The cost, $P_{wear}$, associated with tyre wear may be determined in any suitable manner known in the art.

The cost, $P_{slip,y}$, associated with lateral slip losses of the trailing unit **110-i** may comprise one of the costs above, all of the costs above or any combination of the costs above. The different costs may be multiplied with a corresponding weighting factor, w, in order to adjust their influence on the determination of steering angles. For example, the cost, $P_{swept}$, associated with a swept path of the trailing unit **110-i** may be given a higher weight on narrower roads where the swept path should be kept small. The total cost associated with lateral slip losses may be expressed as:

$$P_{slip,y}(\delta_i) = w_1 * P_{swept}(\delta_i) + w_2 * P_{power}(\delta_i) + w_3 * P_{wear}(\delta_i) \tag{3}$$

wherein $\delta_i$ is the vector of initial steering angle values of steerable axles of trailing unit **110-i**. For example, for a second vehicle unit in a vehicle combination comprising a steered frontmost axle and a steered rearmost axle, a vector $\delta_2$ will comprise angle values $\delta_{21}$ and $\delta_{22}$, i.e. $\delta_{front}$ and $\delta_{rear}$.

In one embodiment, the cost, $P_{slip,y}$, associated with lateral slip losses is further expressed as a function of a steering angle of at least one intermediate axle of the trailing unit. In this case, the vector $\delta_i$ further comprises initial steering angle values of steerable intermediate axles of the trailing unit. For example, for the third vehicle unit in a vehicle combination, comprising a steered frontmost axle, a steered rearmost axle and a steered intermediate axle, a vector $\delta_2$ will comprise initial steering angle values $\delta_{21}$, $\delta_{22}$ and $\delta_{23}$, i.e. $\delta_{front}$, $\delta_{rear}$ and $\delta_{inter}$.

By including intermediate axles of the trailing unit, the trailing unit **110-i** can more effectively follow the turning path of the tractor unit **110-1,** thereby reducing the overall turning radius of the entire vehicle combination and reducing off-tracking. Off-tracking occurs when the rear axles of the trailing unit **110-i** do not follow the same path as the front axles during a turn, leading to lateral displacement. Steering multiple axles of the trailing unit **110-i** ensures that more wheels track closer to the desired path. Further, by including intermediate axles in the method for determining steering angles, the lateral forces acting on the tyres on the trailing unit and tyre scrubbing are further reduced, while power losses are reduced as more axles of the trailing unit are properly aligned to follow the manoeuvre of the tractor unit **110-1**. Consequently, including intermediate axles in the function will affect the costs relating to tyre wear, swept path width and power loss.

In one embodiment, the cost, $P_{slip,y}$, associated with lateral slip losses is further expressed as a function of longitudinal vehicle speed, $v_x$:

$$P_{slip,y}(F_{zi}, v_{xi}, r) = LSRC_i(r, v_{xi}, \mu) * F_{zi} * v_{xi} \tag{4}$$

Herein, $P_{slip,y}$ represents power losses due to lateral slip, $F_{zi}$ represents the vertical force on one or more axles of the vehicle, $v_{xi}$ represents the longitudinal vehicle speed, and $LSRC_i$ represents the lateral slip resistance coefficient discussed above as a function of the radius of a manoeuvre to be performed, longitudinal vehicle speed and the friction coefficient $\mu$ between the wheels of the vehicle and the surface being travelled on. In this way, lateral slip losses for a vehicle may be estimated based on the acquired lateral slip resistance coefficient and parameters of the manoeuvre.

During a turning manoeuvre, the vehicle's longitudinal speed influences cost relating to tyre wear, swept path and power loss in the trailing unit **110-i**. While lower speeds are associated with reduced power losses, increasing the speed is associated with a slight reduction in the maximum swept path width. Vehicle speed is therefore an important parameter in finding a balance between manoeuvrability and efficiency.

At **304,** a value for the first steering angle and a value for the second steering angle are determined such that the cost is below a threshold. The determination is based on the function and initial steering angle values discussed above in relation to step 302 and constraints relating to the steering angles, wherein the constraints are such that the steering angles enable the trailing unit 110-i to travel a curve of a given turning radius. The steering angle values may be then be optimised using any suitable method, for example using a minimum function:

$$[\delta^{*}, P_{slip,y,threshold}] = \min(P_{slip,y}, \delta_{i}, \text{lb}, \text{ub}) \tag{5}$$

Herein, $P_{slip,y}$ is the function discussed above in relation to step 302 which calculates power losses due to lateral slip for given steering angles $\delta_i$, wherein $\delta_i$ is the vector of initial steering angle values for vehicle unit $i$, and *lb, ub* are the lower and uppers bounds for the steering angles. The function will returns the optimal steering angles $\delta^{*}$ for controlling the vehicle to travel the curve of a given radius, while reducing the cost related to lateral power loss such that it is below a threshold. In this way, the vehicle combination **100** is enabled to be manoeuvred to travel the curve in the most efficient way. The level to which the cost should be reduced (i.e. the level of the threshold) can be determined by an operator. In some embodiments, the cost function is solved such that the cost is minimised, and the steering angle values are therefore optimised.

In one embodiment, the value for the first steering angle is in an opposite direction to the value for the second steering angle relative to longitudinal axis of the vehicle combination. In this way, the lateral forces that act on the corresponding axles of the trailing unit **110-i** during the turning manoeuvre are compensated for. By steering the first and second steerable axle in opposite directions, the trailing unit **110-i** is enabled align with the desired path in an improved way whereby lateral slip losses are reduced.

In one embodiment, the values for the respective steering angles are modelled using a vehicle model. The vehicle model is part of the tactical layer **202** discussed above, also referred to as the automated driving system (ADS) of the vehicle combination **100**. The vehicle model may be vehicle model **203,** as discussed in relation to **FIG. 2.** The vehicle model may be based on static and dynamic parameters, wherein the static parameters pertain to the geometric and physical properties of the vehicle, such as shape, size, and mass distribution, and the dynamic parameters describe the forces and moments acting on the vehicle as it moves. The vehicle model may be parameterised and regularly updated to reflect current operating conditions of the vehicle combination, to ensuring accurate motion prediction with a focus on safety and stability. As discussed above, the vehicle model may further comprise a tyre model. The tyre model is an important component in vehicle dynamics simulation, providing insights into the interaction between the tyres and the road surface.

The vehicle model enables precise simulation and analysis of the behaviour of the vehicle combination under different driving conditions, while being simple enough to perform efficient computations in real time. The vehicle model enables the ADS to make informed decisions, which may be communicated as requests and constraints to the vehicle motion controller (VMC) of the vehicle combination.

In one embodiment, the values for the respective steering angles are determined using a model predictive controller (MPC). The MPC enables the optimal steering angles values depending on an objective to be determined by using the MPC. One objective may be to minimise the cost relating to lateral slip losses, as discussed above. In one embodiment, the model predictive controller has a control strategy based on capabilities and constraints for the vehicle combination **100.** Such a control strategy enables the behaviour of the vehicle combination **100** to be predicted while considering the complex dynamics of vehicle combinations, including interactions between the tractor unit **110-1** and trailing units **110-i.** In this way, the MPC is enabled to optimise the steering angles of the trailing unit to minimise lateral slip, off-tracking, and other undesirable effects, during different manoeuvres. The MPC can continuously adapt to changing conditions by adjusting the steering angles based on real-time data, ensuring optimal performance regardless of driving environment.

Optionally, at **306,** the determined steering angle values are provided to a control system configured to determine one or more control inputs for the vehicle combination **100.** The control system may be the vehicle motion controller (VMC) of the vehicle combination **100** shown in relation to **FIG. 2.** The VMC is responsible to implement the requested motion, i.e. the determined steering angles. The determined steering angles may be provided as input to the target generator **204** of the VMC. Based on this input, a control input can then be determined by the force generator **216** so that the vehicle combination **100** can be controlled in an appropriate manner. The control input is implemented using active steering such that the vehicle combination **100** is controlled to travel the curve of a given turning radius with a reduced (e.g. optimal) swept path width and reduced (e.g. minimised) lateral slip losses.

The method **300** enables vehicle combinations to perform low-speed manoeuvres, such as travelling a curve of a given radius, with a reduced (e.g. optimised) swept path with and reduced (e.g. minimised) lateral slip losses. By determining the optimal steering angles for steered axles of a trailing unit of the vehicle combination, active steering of the steered axles of the trailing unit is enabled. In this way, reduced power losses and improved manoeuvrability of the vehicle combination is ensured.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or nontransitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

**Example 1:** A computer system (200, 400) for determining steering angles for steered axles of a trailing unit (110) of a vehicle combination (100), the computer system (200, 400) comprising processing circuitry (402) configured to: express a cost, $P_{slip,y}$, associated with lateral slip losses of the trailing unit (110) as a function of a first steering angle, $\delta_{front}$, of a frontmost axle of the trailing unit (110) and a second steering angle, $\delta_{rear}$, of a rearmost axle of the trailing unit (110); and determine a value for the first steering angle, $\delta_{front}$, and a value for the second steering angle, $\delta_{rear}$, such that the cost, $P_{slip,y}$, is below a threshold, wherein the first steering angle, $\delta_{front}$, and the second steering angle, $\delta_{rear}$, enable the trailing unit (110) to travel a curve of a given turning radius.

**Example 2:** The computer system (200, 400) of example 1, wherein the cost, $P_{slip,y}$, comprises a cost associated with a swept path of the trailing unit, $P_{swept}$, as a function of the steering angles, $\delta_{front}$, $\delta_{rear}$, for the steered axles of the trailing unit (110).

**Example 3:** The computer system (200, 400) of any preceding example, wherein the cost, $P_{slip,y}$, comprises a cost associated with a power loss, $P_{power}$, of the trailing unit (110) as a function of the steering angles, $\delta_{front}$, $\delta_{rear}$, for the steered axles of the trailing unit (110).

**Example 4:** The computer system (200, 400) of any preceding example, wherein the cost, $P_{slip,y}$, comprises a cost associated with tyre wear, $P_{tyre}$, of the trailing unit (110) as a function of the steering angles, $\delta_{front}$, $\delta_{rear}$, for the steered axles of the trailing unit (110).

**Example 5:** The computer system (200, 400) of any preceding example, wherein the processing circuitry (402) is further configured to express the cost, $P_{slip,y}$, associated with lateral slip losses as a function of a steering angle, $\delta_{inter}$, of at least one intermediate axle of the trailing unit (110) and determine a value for the steering angle, $\delta_{inter}$, of the at least one intermediate axle such that the cost, $P_{slip,y}$, is below the threshold, wherein the at least one intermediate axle is located between the frontmost and the rearmost axle.

**Example 6:** The computer system (200, 400) of any preceding example, wherein the value for the first steering angle, $\delta_{front}$, is in an opposite direction to the value for the second steering angle, $\delta_{rear}$, relative to longitudinal axis of the vehicle combination (100).

**Example 7:** The computer system (200, 400) of any preceding example, wherein the processing circuitry (402) is further configured to express the cost, $P_{slip,y}$, as a function of vehicle speed.

**Example 8:** The computer system (200, 400) of any preceding example, wherein the processing circuitry (402) is configured to model the values for the steering angles using a vehicle model (203).

**Example 9:** The computer system (200, 400) of any preceding example, wherein the processing circuitry (402) is configured to determine the values for the steering angles using a model predictive controller.

**Example 10:** The computer system (200, 400) of example 9, wherein the model predictive controller has a control strategy based on capabilities and constraints for the vehicle combination.

**Example 11:** The computer system (200, 400) of any preceding example, wherein the processing circuitry (402) is further configured to provide the determined steering angle values to a control system (204, 206, 208) configured to determine one or more control inputs for the vehicle combination (100).

**Example 12:** A vehicle (100) comprising the computer system (200, 400) of any preceding example.

**Example 13:** A computer-implemented method (300) for determining steering angles for steered axles of a trailing unit (110) of a vehicle combination (100), the method (300) comprising: expressing (302), by processing circuitry (402) of a computer system (200, 400), a cost, $P_{slip,y}$, associated with lateral slip losses of the trailing unit (110) as a function of a first steering angle, $\delta_{front}$, of a frontmost axle of the trailing unit and a second steering angle, $\delta_{rear}$, of a rearmost axle of the trailing unit (110); and determining (304), by the processing circuitry (402), a value for the first steering angle, $\delta_{front}$, and a value for the second steering angle, $\delta_{rear}$, such that the cost, $P_{slip,y}$, is below a threshold, wherein the first

steering angle, $\delta_{front}$, and the second steering angle, $\delta_{rear}$, enable the trailing unit (110) to travel a curve of a given turning radius.

**Example 14:** The computer-implemented method (300) of example 13, wherein the cost, $P_{slip,y}$, comprises a cost associated with a swept path of the trailing unit, $P_{swept}$, as a function of the steering angles, $\delta_{front}$, $\delta_{rear}$, for the steered axles of the trailing unit (110).

**Example 15:** The computer-implemented method (300) of example 13 or 14, wherein the cost, $P_{slip,y}$, comprises a cost associated with a power loss, $P_{power}$, of the trailing unit (110) as a function of the steering angles, $\delta_{front}$, $\delta_{rear}$, for the steered axles of the trailing unit (110).

**Example 16:** The computer-implemented method (300) of example 13 to 15, wherein the cost, $P_{slip,y}$, comprises a cost associated with tyre wear, $P_{tyre}$, of the trailing unit (110) as a function of the steering angles, $\delta_{front}$, $\delta_{rear}$, for the steered axles of the trailing unit (110).

**Example 17:** The computer-implemented method (300) of example 13 to 16, further comprising expressing the cost, $P_{slip,y}$, associated with lateral slip losses, by the processing circuitry (402), as a function of a steering angle, $\delta_{inter}$, of at least one intermediate axle of the trailing unit (110) and a value for the steering angle, $\delta_{inter}$, of the at least one intermediate axle is further determined such that the cost, $P_{slip,y}$, is below the threshold, wherein the at least one intermediate axle is located between the frontmost and the rearmost axle.

**Example 18:** The computer-implemented method (300) of example 13 to 17, wherein the value for the first steering angle, $\delta_{front}$, is in an opposite direction to the value for the second steering angle, $\delta_{rear}$, relative to longitudinal axis of the vehicle combination (100).

**Example 19:** The computer-implemented method (300) of example 13 to 18, further comprising expressing the cost, $P_{slip,y}$, by the processing circuitry, as a function of vehicle speed.

**Example 20:** The computer-implemented method (300) of example 13 to 19, further comprising determining the values for the steering angles, by the processing circuitry (402), using a vehicle model (203).

**Example 21:** The computer-implemented method (300) of example 13 to 20, further comprising determining the values for the steering angles, by the processing circuitry (402), using a model predictive controller.

**Example 22:** The computer-implemented method (300) of example 21, wherein the model predictive controller has a control strategy based on capabilities and constraints for the vehicle combination.

**Example 23:** The computer-implemented method (300) of example 13 to 22, further comprising providing (306) the determined steering angle values, by the processing circuitry (402), to a control system (204, 206, 208) configured to determine one or more control inputs for the vehicle combination (100).

**Example 24:** A computer program product comprising program code for performing, when executed by processing circuitry (402), the computer-implemented method (300) of any of examples 13 to 23.

**Example 25:** A non-transitory computer-readable storage medium comprising instructions, which, when executed by processing circuitry (402), cause the processing circuitry to perform the computer-implemented method (300) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (200, 400) for determining steering angles for steered axles of a trailing unit (110) of a vehicle combination (100), the computer system (200, 400) comprising processing circuitry (402) configured to:

   express a cost, $P_{slip,y}$, associated with lateral slip losses of the trailing unit (110) as a function of a first steering angle, $\delta_{front}$, of a frontmost axle of the trailing unit (110) and a second steering angle, $\delta_{rear}$, of a rearmost axle of the trailing unit (110); and
   determine a value for the first steering angle, $\delta_{front}$, and a value for the second steering angle, $\delta_{rear}$, such that the cost, $P_{slip,y}$, is below a threshold,
   wherein the first steering angle, $\delta_{front}$, and the second steering angle, $\delta_{rear}$, enable the trailing unit (110) to travel a curve of a given turning radius.

2. The computer system (200, 400) of claim 1, wherein the cost, $P_{slip,y}$, comprises a cost associated with a swept path of the trailing unit, $P_{swept}$, as a function of the steering angles, $\delta_{front}$, $\delta_{rear}$, for the steered axles of the trailing unit (110).

3. The computer system (200, 400) of any preceding claim, wherein the cost, $P_{slip,y}$, comprises a cost associated with a power loss, $P_{power}$, of the trailing unit (110) as a function of the steering angles, $\delta_{front}$, $\delta_{rear}$, for the steered axles of the trailing unit (110).

4. The computer system (200, 400) of any preceding claim, wherein the cost, $P_{slip,y}$, comprises a cost associated with tyre wear, $P_{tyre}$, of the trailing unit (110) as a function of the steering angles, $\delta_{front}$, $\delta_{rear}$, for the steered axles of the trailing unit (110).

5. The computer system (200, 400) of any preceding claim, wherein the processing circuitry (402) is further configured to express the cost, $P_{slip,y}$, associated with lateral slip losses as a function of a steering angle, $\delta_{inter}$, of at least one intermediate axle of the trailing unit (110) and determine a value for the steering angle, $\delta_{inter}$, of the at least one intermediate axle such that the cost, $P_{slip,y}$, is below the threshold, wherein the at least one intermediate axle is located between the frontmost and the rearmost axle.

6. The computer system (200, 400) of any preceding claim, wherein the value for the first steering angle, $\delta_{front}$, is in an opposite direction to the value for the second steering angle, $\delta_{rear}$, relative to longitudinal axis of the vehicle combination.

7. The computer system (200, 400) of any preceding claim, wherein the processing circuitry (402) is further configured to express the cost, $P_{slip,y}$, as a function of vehicle speed.

8. The computer system (200, 400) of any preceding claim, wherein the processing circuitry (402) is configured to model the values for the steering angles using a vehicle model (203).

9. The computer system (200, 400) of any preceding claim, wherein the processing circuitry (402) is configured to determine the values for the steering angles using a model predictive controller.

10. The computer system (200, 400) of claim 9, wherein the model predictive controller has a control strategy based on capabilities and constraints for the vehicle combination.

11. The computer system (200, 400) of any preceding claim, wherein the processing circuitry (402) is further configured to provide the determined steering angle values to a control system (204, 206, 208) configured to determine one or more control inputs for the vehicle combination (100).

12. A vehicle combination (100) comprising the computer system (200, 400) of any preceding claim.

13. A computer-implemented method (300) for determining steering angles for steered axles of a trailing unit (110) of a vehicle combination (100), the method (300) comprising:

    expressing (302), by processing circuitry (402) of a computer system (200, 400), a cost, $P_{slip,y}$, associated with lateral slip losses of the trailing unit (110) as a function of a first steering angle, $\delta_{front}$, of a frontmost axle of the trailing unit and a second steering angle, $\delta_{rear}$, of a rearmost axle of the trailing unit (110); and
    determining (304), by the processing circuitry (402), a value for the first steering angle, $\delta_{front}$, and a value for the second steering angle, $\delta_{rear}$, such that the cost, $P_{slip,y}$, is below a threshold;
    wherein the first steering angle, $\delta_{front}$, and the second steering angle, $\delta_{rear}$, enable the trailing unit (110) to travel a curve of a given turning radius.

14. A computer program product comprising program code for performing, when executed by the processing circuitry (402), the computer-implemented method (300) of claim 13.

15. A non-transitory computer-readable storage medium comprising instructions, which when executed by the processing circuitry (402), cause the processing circuitry (402) to perform the computer-implemented method (300) of claim 13.

**FIG. 1A**

EP 4 714 790 A1

**FIG. 1B**

**FIG. 2**

300

| Expressing a cost associated with lateral slip losses of the trailing unit | 302 |

| Determining a value for the first steering angle and a value for the second steering angle such that the cost is below a threshold | 304 |

| Providing the determined steering angle values to a control system configured to determine control inputs for the vehicle combination | 306 |

**FIG. 3**

400 · 404 · 408 · 412 · 410 · 416 · 418 · 402 · 406 · 414 · 420 · 422 · 424 · 426

**FIG. 4**

Europäisches
Patentamt

European
Patent Office

Office européen
des brevets

## EUROPEAN SEARCH REPORT

**Application Number**

EP 25 19 4286

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AU 2015 200 116 A1 (MECHANICAL SYSTEM DYNAMICS PTY LTD) 5 February 2015 (2015-02-05) * page 10, line 6 - line 18 * * page 14, line 30 - page 18, line 30 * * figures 1, 10-17 * ----- | 1-15 | INV. B62D13/04 |
| A | WO 2009/019444 A1 (CAMBRIDGE ENTPR LTD [GB]; CEBON DAVID [GB]) 12 February 2009 (2009-02-12) * page 3, line 11 - line 14 * * page 12, line 32 - page 18, line 28 * * figures * ----- | 1-15 | |

TECHNICAL FIELDS
SEARCHED      (IPC)

B62D

The present search report has been drawn up for all claims

| Place of search | Date of completion of the search | Examiner |
|---|---|---|
| The Hague | 9 January 2026 | Kulozik, Ehrenfried |

EPO FORM 1503 03.82 (P04C01)

## ANNEX TO THE EUROPEAN SEARCH REPORT
## ON EUROPEAN PATENT APPLICATION NO.

EP 25 19 4286

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2026

| Patent document cited in search report | Publication date | Patent family member(s) | | Publication date |
|---|---|---|---|---|
| AU 2015200116 A1 | 05-02-2015 | NONE | | |
| WO 2009019444 A1 | 12-02-2009 | AT | E530415 T1 | 15-11-2011 |
| | | CA | 2695482 A1 | 12-02-2009 |
| | | EP | 2173599 A1 | 14-04-2010 |
| | | US | 2011202238 A1 | 18-08-2011 |
| | | WO | 2009019444 A1 | 12-02-2009 |

EPO FORM P0459

For more details about this annex : see Official Journal of the European Patent Office, No. 12/82